# EUROPEAN PATENT APPLICATION

(11) **EP 2 224 377 A2**
(43) Date of publication of application: **01.09.2010**
(21) Application number: 09015493.1
(22) Date of filing: 15.12.2009
(51) Int. Cl.: G06K 19/07, G06K 19/077

(54) **Undirectional active electronic tag and method for setting parameters thereof**

(30) Priority: 25.02.2009 TW 98105944
(71) Applicant: Champtek Incorporated, Hsin-Tien City 231 Taipei (TW)
(72) Inventor: Huang, Shu-Ying, Hsin Tien City 231 Taipei (TW); Pang, Li-Dar, Hsin Tien City 231 Taipei (TW)
(74) Representative: TER MEER - STEINMEISTER & PARTNER GbR

(57) **Abstract**

A unidirectional active electronic tag (10) and a method for setting parameters thereof are provided. The electronic tag (10) includes a first memory (22) configured for storing a tag identification code of the electronic tag, a CPU (24) configured for processing instructions and information received by the electronic tag, a second memory (28) configured for storing a plurality of emitting parameters, at least one input unit (14) configured for setting needed parameters in actual need by users, a transmitting and receiving unit (30) and a transceiver antenna (32). When the users set the parameters, the CPU (24) judges the parameters set by the users, selects a corresponding emitting parameter stored in the second memory (28), and transmit signals out through the transmitting and receiving unit (30) and the transceiver antenna (32).

## Description

### BACKGROUND

### 1. Field of the Invention

The present invention relates to a unidirectional active electronic tag, and more particularly to an active electronic tag which can employs an input unit to set parameters by users.

### 2. Description of the Related Art

Radio frequency identification (RFID) is a communication technology, which can employ wireless signals to identify specific objects and read relational data. Currently, the RFID technology is widely applied into daily life of human. For example, animal chip inserted into family pet, theftproof chip attached on publication of bookstore or library, easy-card for riding bus or metro, and ETC automatic fare collection system disposed at freeway toll station, etc., are all actual applications of the RFID technology.

A whole RFID system includes a reader, a RFID tag and a data collecting and applying terminal. The RFID tag is also called a radio frequency (RF) tag or an electronic tag, which is mainly composed of a large-scale integrated circuit (IC) chip storing an identification code, and a transceiver antenna. The RFID tag has many advantages, such as, little size, difficult to be copied, high capability for suffering the environment variation, and large capacity for storing data, etc. Furthermore, the reader of the RFID system can read many groups of data simultaneously in a read range thereof, but general bar-code tags only can aim to objects to read one by one, thus the RTID system can save abundant manpower and time.

The electronic tag can be divided into active and passive. The active electronic tag has an in-built battery, and can employ its electric power to form an effectual active region round the tag for actively detecting whether having calling signals from the reader and transmit its signals therein to the reader. The passive electronic tag does not have the in-built power source, and operates by an electric power produced by an electrical field of the reader. Thus the passive electronic tag operates only when it is adjacent to the reader.

For conventional active mode electronic tag in market, emitting cycle and power parameters thereof must be predetermined uniformly before it leaves factories, thus users cannot design or alter the parameters thereof according to the current environment. Therefore, the conventional electronic tag is inconvenient in use.

### BRIEF SUMMARY

The present invention relates to a unidirectional active electronic tag having an input unit, wherein the input unit is mainly configured for altering emitting cycle and power parameters of the tag.

A unidirectional active electronic tag of the present invention is provided. The unidirectional active electronic tag comprises a power source configured for providing an electric power to operate the electronic tag, a central processing unit (CPU) configured for processing instructions and information received by the electronic tag, a first memory electrically coupled to the CPU for storing a tag identification code of the electronic tag, a second memory electrically coupled to the CPU for storing a plurality of emitting parameters of the electronic tag, a transceiver antenna, a transmitting and receiving unit electrically coupled to the CPU and the transceiver antenna, and at least one input unit electrically coupled to the CPU for setting the parameters according to actual need by users.

When the users set the parameters, the CPU detects an input state of the input unit to select one of the emitting parameters stored in the second memory, and then transmits the selected emitting parameter out thereof.

The present invention employs the input unit to make the unidirectional electronic tag have many variations of the parameters. Furthermore, the method for setting the parameters is very simple, and the users are prone to perform the method. Therefore, the users do not need to purchase many products in a same kind and with different standards.

### BRIEF DESCRIPTION OF THE DRAWINGS

These and other features and advantages of the various embodiments disclosed herein will be better understood with respect to the following description and drawings, in which like numbers refer to like parts throughout, and in which:

FIG. 1 is an exterior schematic view of a unidirectional active electronic tag in accordance with the present invention.

FIG. 2 is an interior block view of the unidirectional active electronic tag of the present invention.

FIG. 3 is a flow chart of a method for setting parameters of the unidirectional active electronic tag in accordance with the present invention.

### DETAILED DESCRIPTION

Reference will now be made to the drawings to describe exemplary embodiments of the present unidirectional active electronic tag and a method for setting parameters thereof, in detail. The following description is given by way of example, and not limitation.

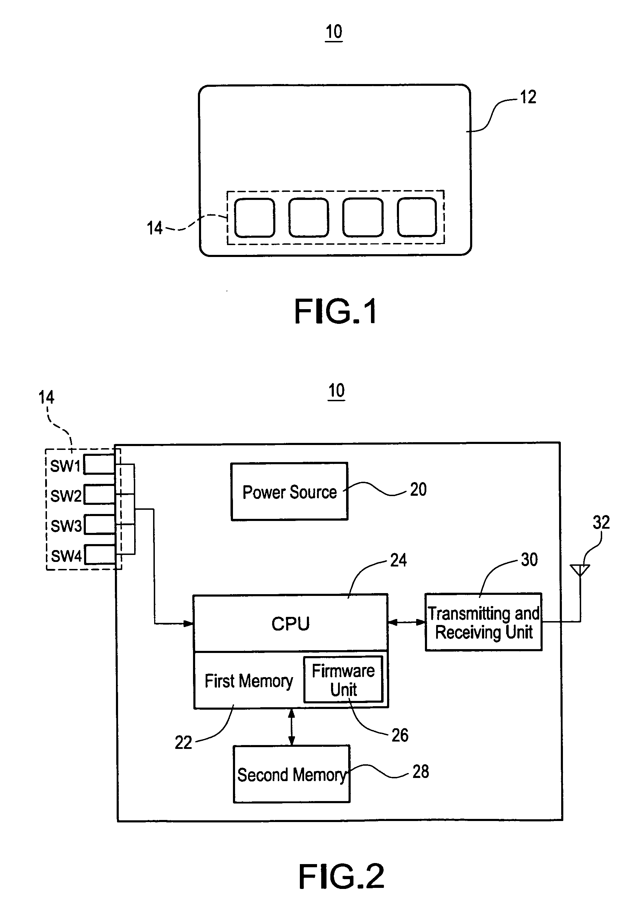

Refer to FIG. 1, which is an exterior schematic view of a unidirectional active electronic tag 10 in accordance with the present invention. The unidirectional active electronic tag 10 includes a rectangular body 12, and four corners of the body 12 are all round corners. Furthermore, at least one input unit 14 is disposed at an edge of the unidirectional active electronic tag 10. In this exemplary embodiment, the input unit 14 includes four dip switches SW1-SW4, and each of the dip switches SW1-SW4 has two different using-states (off, on). The dip switches may be moved by a finger to change the using-states thereof for adjusting parameters of the electronic tag 10.

Refer to FIG. 2 together, which is an interior block view of the unidirectional active electronic tag 10 of the present invention. The electronic tag 10 includes a power source 20, a central processing unit (CPU) 24, a first memory 22, a second memory 28, a transceiver antenna 32, a transmitting and receiving unit 30, and the at least one input unit 14. The power source 20 is configured for providing an electric power to operate the electronic tag 10. The CPU 24 is configured for processing instructions and information received by the electronic tag 10. The first memory 22 is electrically coupled to the CPU 24 for storing a tag identification (Tag ID) code of the electronic tag 10. The second memory 28 is electrically coupled to the CPU 24, and the second memory 28 further has a firmware unit 26 therein for storing a plurality of emitting parameters and a method for setting parameters thereof respectively. The second memory 28 may be an electronic erasable programmable read only memory (EEPROM) or a static random access memory (SRAM). The transmitting and receiving unit 30 is electrically coupled to CPU 24 and the transceiver antenna 32 respectively, and cooperates with the transceiver antenna 32 to receive and emit signals. The at least one input unit 14 is configured for setting needed emitting parameters by the users according to actual need.

When the users sets the needed emitting parameters, the CPU 24 can detect an input state of the input unit 14, and can employ the setting method (described in detail in following) stored in the firmware unit 26 to select predetermined emitting parameters (that is, a specific emitting power and a specific emitting cycle) stored in the second memory 28 for transmitting the signals. Thus the signals are transmitted out by the transmitting and receiving unit 30 and the transceiver antenna 32.

In a first exemplary embodiment of the present invention, the dip switches SW1 and SW2 are power-adjusting switches, and the dip switches SW3 and SW4 are cycle-adjusting switches. However, in actual applications, corresponding modes between the parameters and the dip switches may be determined by the actual need of the users. Since each of the parameters has two corresponding adjusting switches, not only the power parameter but also the cycle parameter have four different states, which are OFF-OFF, OFF-ON, ON-OFF, and ON-ON respectively. In addition, if assuming that a maximum power is P and a maximum cycle is T, the different states of the power (P1∼P4) parameter and the cycle (T1∼T4) parameter will be described in following:
1. When the dip switches SW1 and SW2 are both in the off state, an emitting power which is 25% of the maximum power P is outputted. That is, the emitting power is P1=0.25P.
2. When the dip switch SW1 is in the off state and the dip switch SW2 is in the on state, an emitting power which is 50% of the maximum power P is outputted. That is, the emitting power is P2=0.5P.
3. When the dip switch SW1 is in the on state and the dip switch SW2 is in the off state, an emitting power which is 75% of the maximum power P is outputted. That is, the emitting power is P3=0.75P.
4. When the dip switches SW1 and SW2 are both in the on state, an emitting power which is the maximum power P is outputted. That is, the emitting power is P4=P.
5. When the dip switches SW3 and SW4 are both in the off state, an emitting cycle which is 25% of the maximum emitting cycle T is outputted. That is, the emitting cycle is T1=0.25T.
6. When the dip switch SW3 is in the off state and the dip switch SW4 is in the on state, an emitting cycle which is 50% of the maximum emitting cycle T is outputted. That is, the emitting cycle is T2=0.5T.
7. When the dip switches SW3 is in the on state and the dip switch SW4 is in the off state, an emitting cycle which is 75% of the maximum emitting cycle T is outputted. That is, the emitting cycle is T3=0.75T.
8. When the dip switches SW3 and SW4 are both in the on state, an emitting cycle which is the maximum emitting cycle T is outputted. That is, the emitting cycle is T4=T. The above description describes different results generated by setting the power parameter and the cycle parameter differently.

Then, the power parameters (P1∼P4) and cycle parameters (T1∼T4) may be cooperated with each other, and the following will describe different combinations thereof. When the power parameter is set to be 0.25P, the power parameter may cooperate with four different cycle parameters of 0.25T, 0.5T, 0.75T and T. When the power parameter is 0.25P and the cycle parameter is 0.25T, the electronic tag is set to make the emitting power be 0.25 of the maximum power P and make the emitting cycle be 0.25 of the maximum emitting cycle T. Therefore, when the maximum power P of the electronic tag is 4 watts and the maximum emitting cycle T is 1 minute, the electronic tag is set to make the emitting power thereof be 1 watt and make the emitting cycle to be 15 seconds. Similarly, when the power parameter is set to be 0.5P, 0.75P or P, the power parameter also can cooperate with the cycle parameters of 0.25T, 0.5T, 0.75T and T. Therefore, the power parameters and the cycle parameters may cooperate to combine 16 different states.

If the unidirectional active electronic tag 10 is configured for tracing a large-range dynamic object (such as, vehicle), the users can operate the input unit 14 to make the unidirectional active electronic tag 10 have a maximum emitting power and a minimum emitting cycle, that is real-time tracing. If the unidirectional active electronic tag 10 is configured for tracing a little-range static object (such as things in warehouse), the users can operate the input unit 14 to make the unidirectional active electronic tag 10 have a minimum emitting power and a maximum emitting cycle for increasing an using time of a battery of the unidirectional active electronic tag 10.

Another unidirectional active electronic tag in accordance with another exemplary embodiment of the present invention is similar to that of the first exemplary embodiment, except that the input unit 14 of this exemplary embodiment is a button switch (not shown) instead of four dip switches disposed at an edge of the electronic tag. Therefore, the CPU 24 can judge a time of pressing the button switch to provide different variations of the parameters for adjusting the parameters of the electronic tag according to the actual need of the users.

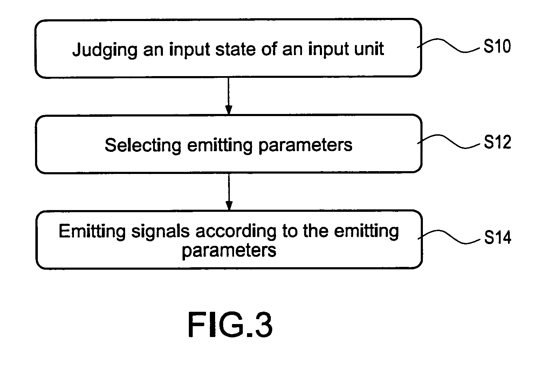

FIG. 3 is a flow chart of a method for setting the parameters thereof in accordance with the present invention. Some steps of the method may be programs stored in the firmware unit 26 to make the CPU 24 set the emitting parameters according to the input state of the input unit 14. Firstly, in a step S10, the CPU 24 judges the input state (the on-off state or the pressing time of the switch) of the input unit 14. Then, in a step S12, the CPU 24 selects the predetermined emitting parameters (such as the above emitting powers P1∼P4 and the above emitting cycles T1∼T4) stored in the second memory 28. Finally, in a step S13, the CPU 24 transmits the signals by the transmitting and receiving unit 30 and the transceiver antenna 32 according to the emitting parameters.

In summary, the unidirectional active electronic tag disposes the input unit 14 (such as the plurality of dip switches) on the body 12, thus the users can adjust the needed power and cycle parameters according to the actual need. Furthermore, the method for setting the parameters is simple, and the users do not need to purchase many electronic tags with different standards.

The above description is given by way of example, and not limitation. Given the above disclosure, one skilled in the art could devise variations that are within the scope and spirit of the invention disclosed herein, including configurations ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A unidirectional active electronic tag (10), comprising:
a first memory (22) configured for storing an tag identification code of the electronic tag;
a central processing unit (CPU) (24) electrically coupled to the first memory;
a second memory (28) electrically coupled to the CPU and configured for storing a plurality of emitting parameters, wherein the emitting parameters has an emitting power and an emitting cycle;
a transmitting and receiving unit (30) electrically coupled to the CPU;
a transceiver antenna (32) electrically coupled to the transmitting and receiving unit; and
an input unit (14) electrically coupled to the CPU;
wherein the CPU is configured for judging an input state of the input unit to select one of the plurality of emitting parameters, and controlling the transmitting and receiving unit and the transceiver antenna to emit signals according to a selected emitting parameter.

2. The electronic tag as claimed in claim 1, wherein the input unit (14) comprises a plurality of dip switches, and the CPU (24) judges on-off states of the dip switches to select the selected emitting parameter.

3. The electronic tag as claimed in claim 1, wherein the input unit (14) comprises a button switch, and the CPU (24) judges a time of pressing the button switch to select the selected emitting parameter.

4. The electronic tag as claimed in claim 1, wherein the second memory (28) is an electronic erasable programmable read only memory (EEPROM) or a static random access memory (SRAM).

5. A method for setting parameters of a unidirectional active electronic tag, the unidirectional active electronic tag (10) comprising a central processing unit (CPU) (24) and a first memory (22) configured for storing a tag identification code of the electronic tag, the method comprising:
providing an input unit (14) electrically coupled to the CPU;
providing a second memory (28) electrically coupled to the CPU and configured for storing a plurality of emitting parameters, wherein the emitting parameters has an emitting power and an emitting cycle;
judging an input state of the input unit to select one of the plurality of emitting parameters; and
emitting signals according to a selected emitting parameter.

6. The method as claimed in claim 5, wherein the input unit (14) comprises a plurality of dip switches, and the CPU (24) judges on-off states of the dip switches to select the selected emitting parameter.

7. The method as claimed in claim 5, wherein the input unit (14) comprises a button switch, and the CPU (24) judges a time of pressing the button switch to select the selected emitting parameter.

8. The method as claimed in claim 5, wherein the second memory (28) is an electronic erasable programmable read only memory or a static random access memory.
